# EUROPEAN PATENT APPLICATION

(11) **EP 3 593 646 A1**
(43) Date of publication of application: **15.01.2020**
(21) Application number: 18000051.5
(22) Date of filing: 23.01.2018
(51) Int. Cl.: A23L 7/10, A23L 3/10, A23B 9/02

(54) **CONVENIENCE FOOD CONTAINING BULGUR**

(30) Priority: 29.12.2017 TR 201722789
(71) Applicant: Duru Bulgur Gida San.Ve Tic. A.S., Karaman (TR)
(72) Inventor: Duru, Ziya, Karaman (TR)
(74) Representative: Sevinç, Cenk

(57) **Abstract**

The invention relates to convenience food containing bulgur that can be prepared in 3 minutes, comprises bulgur, water, butter, olive oil, salt or seasoning, to which sterilization process is applied by keeping at various temperatures and pressure so as to kill all bacteria and spores therein and is served to user with rapid cooling, and also relates to the method for producing said food.

## Description

### Related Technical Field

The invention relates to convenience food containing bulgur that can be prepared in 3 minutes, comprises bulgur, water, butter, olive oil, salt or seasoning, to which sterilization process is applied by keeping at various temperatures and pressure so as to kill all bacteria and spores therein, and is served to user with rapid cooling.

### State of the Art

Bulgur is a kind of cereal that is easy to cook, is cleaned, is parboiled, is dried, is grinded, and is sifted in different sizes. It is a multi-functional cereal product that has a high nutritional value, has a taste similar to hazel nut taste, and has a long shelf life. It is mostly thought to be grinded wheat, in fact it is different from wheat as it is pre-cooked. Stages carried out to obtain bulgur is substantially different from the stages carried out to obtain grinded wheat. Bulgur can be consumed by simmering it or keeping it in water and can be used together with the other products that do not need cooking. Bulgur is a cereal product that is similar to rice and couscous, however it has a more nutritional value than rice and couscous. Bulgur is mostly used in bulgur salad, bulgur dish, soup, pastry products, farci and casserole because of the fact that it is delicious and has a low fat rate. Because it has a multiple use and a high nutritional value, it fits to vegetarian diet. Bulgur having a feature to be used instead of meat is also one of the irreplaceable ingredients used in vegetarian hamburger patties. Bulgur of which raw material is wheat, is a more nutritional product than rice. It is a traditional food in Anatolia. It is not only economical but also has a high carbohydrate value. Zinc, bran, chrome and magnesium being ones of nutritional elements of wheat are substantially being in the bulgur. Furthermore, selenium and all B vitamins except for phytates and B12 are being in bulgur. Moreover, it is very rich in terms of fiber. It can mostly cover the need for folic acid of babies and pregnant women thanks to its folic acid content. It is very resistant to molding and corruption and is even possible to be stored in a sunless place for a long time.

Bulgur being rich in terms of nutritional value and having a plenty of benefits in terms of human health is mostly consumed specially in Anatolian Region. Bulgur is a food product that is produced through cleaning, boiling, grinding in mill, drying, and sorting the wheat in sizes, has a high nutritional value, is natural and traditional, and is in a half-way form to be consumed. When examined bulgur in terms of its nutritional values, 100g of bulgur has approximately 345 kcal of energy value. Further, it contains 57,3g of carbohydrate, 11g of fiber, 12g of protein, 2,7g of fat, 48 µg of folic acid, 3,06mg of niacin, 0,76µg of biotin (vitamin B7), 0,23mg of vitamin B6, 0,40mg of pantothenic acid (vitamin B5). Bulgur is mostly consumed as bulgur dish, though it has many consuming forms. There are not many alternatives to bulgur in restaurants for those who care for their health and want to consume healthy and fiber-rich products. Bulgur dishes prepared through conventional cooking methods, have a limited consuming period and it is mostly recommended to be consumed in two days. There substantially exits different four types of autoclave that are also used in convenience food production. Those are steam autoclave, hot water-steam spraying autoclave, water-dipping autoclave and air-steam spraying autoclave. When considered the product characteristics, investment costs and the like, the most common autoclave is the water-dipping autoclave. However, the water in the medium is heated up the sterilization temperature in this type of autoclave, causing organoleptic losses to increase in the product. Sterilization takes longer in cans used in autoclaves and the product may be exposed to tin migration through cans in time. Cans are not practical in terms of ease of use.

New products have been nowadays produced by means of various studies so as to improve the ready bulgur dish that can be consumed by consumer in a short time. One of said studies is the invention subject to the patent no. 2015/07211 and titled "Pratik bulgur pilavi ve üretim yöntemi". The invention is a ready-to-cook bulgur dish mixture of which main ingredient is bulgur and is mixed with dried and chopped tomato and some spices and seasonings, wherein it is a convenience food aiming to be practical. Practical method for producing bulgur dish subject to the invention comprises the following stages; carrying out a control for moisture and foreign objects in bulgur, frying it in vegetable oil for 5-15 seconds, filtering the fried bulgur from the oil, cooling it to room temperature and sterilely packing the half-boiled bulgur obtained.

Another study is the invention subject to the patent numbered 2016/06244 and titled "Sicak su ile veya mikrodalga firinda hazirlanabilen çe 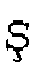 nili hazir bulgur pilavi üretimi yontemi ve bu yontem ile elde edilen ürünler". The invention focuses on decreasing cooking time of the boiled and dried wheat (bulgur), legume and grains by means of carrying out heat treatment thereon. The invention relates to the method subject to producing the ready-to-serve bulgur dish by adding water at 80-100°C therein or by heating it in microwave oven after adding water, and subject to seasoning it with one or some of flavorer vegetable, beef stock cube, chicken stock cube, spice, hot sauce, tomato sauce, salt products. While it generally takes 20-60 minutes to cook the cleaned, boiled and dried bulgur, legume and grains in the present art, bulgur, legume and grains has been formed as hot natural seasoned convenience food that can be consumed by adding water at 80-100°C or by heating in microwave oven for 1-10 minutes after adding water.

Another study is the invention subject to the invention numbered 2012/06842 and titled "Pi 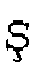 irmeye hazir mercimekli bulgur pilavi" The invention is a ready-to-cook bulgur dish mixture of which main ingredient is bulgur and is mixed with the pre-cooked lentil and various seasonings, wherein it is a convenience food aiming to be practical.

Another study is the invention subject to the invention numbered 2012/06844 and titled "Pi 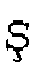 irmeye hazir kuru domatesli bulgur pilavi". The invention is a ready-to-cook bulgur dish mixture of which main ingredient is bulgur and is mixed with dried and chopped tomato and some spices and seasonings, wherein it is a convenience food aiming to be practical.

In conclusion, existence of the need for convenience food containing bulgur which eliminates the disadvantages in the present art and insufficiency of the present solutions made it necessary to carry out a development in the related technical field.

### Advantages gained through the invention

The present invention relates to convenience food containing bulgur, which will meet the needs mentioned above, eliminate all of the disadvantages, and provide some other advantages.

In the light of the state of art, objective of the invention is to provide the product in which bacteria and spores are sterilized by means of the improved method for producing convenience food containing bulgur, and that can be consumed after preparing it in 3 minutes.

Objective of the invention is to ensure that consumer can consume the product after preparing it in 3 minutes by means of the pre-process applied to the convenience food containing bulgur.

Another objective of the invention is to provide consumer with both practical and delicious product as the improved convenience food containing bulgur comprises bulgur, water, butter, olive oil, salt or seasoning.

Another objective of the invention is to ensure that all bacteria and spores are sterilized by means of sterilization process in which the improved convenience food containing bulgur is kept under various temperatures and pressure during production stages.

Another objective of the invention is to provide such that bulgur dishes prepared with the bulgur that is a healthy and natural product, is to formed as easy-to-use, light weighted packed and consumable by heating for a short time in microwave oven or on pan.

Another objective of the invention is to ensure to produce the bulgur dish constituting no danger during shelf life in terms of food security by means of sterilization process applied in the production stage of the improved convenience food containing bulgur.

Another objective of the invention is to provide elimination of problems resulting from cans by means of using retort pouch as packing material of the improved convenience food containing bulgur.

Another objective of the invention is to ensure to minimize color losses in the product, to maintain the original taste and structure of the product and to prevent packing material from damaging during the production process by means of applying 2 stages of air-steam sprayer autoclave to convenience food containing bulgur.

The structural and the characteristic features and all advantages of the invention will be understood more clearly with the detailed description written below and the evaluation needs to be done by taking this detailed description into consideration.

### Detailed Description of the Invention

This detailed description has been given solely for better understanding of the convenience food containing bulgur and the production method thereof subject to the invention as a sample and does not have any restrictive effect.

Convenience food containing bulgur subject to the application that can be prepared in 3 minutes, comprises bulgur, water, butter, olive oil, salt or seasoning, to which sterilization process is applied by keeping at various temperatures and pressure so as to kill all bacteria and spores therein, and is served to user with rapid cooling has been developed for the purpose of the fact that the bulgur dishes prepared with bulgur that is a healthy and natural product is formed as easy-to-use, light weighted packing, consumable by heating in a microwave oven or pan, and is served to consumers. All of the bacteria and spores in the product are sterilized by means of the steam and air mixed sterilization technique used during the production of said convenience food containing bulgur and the bulgur dishes constituting no danger in terms of food security throughout its shelf life can be produced.

Bulgur is rich in soluble and unsoluble fibers. Its carbohydrate value is low, and its protein value is high. It is not only economical but also has a high carbohydrate value. Zinc, bran, chrome and magnesium being ones of nutritional elements of wheat are substantially being in the bulgur. Furthermore, it is rich in vitamins B1, B6 and niacin. Fibers and structures such as cellulose, pectin and gum in bulgur have a balancing effect on systems in the body. Water-soluble fibers decrease cholesterol by controlling blood sugar. Health authorities have detected that fibrous foods also prevent cancer. Fibrous foods speed up to lose weight by providing feeling of more fullness when compared to other foods. Moreover, it causes to drink more water as it increases the daily water need. A healthy human needs approximately 20-30g of fiber a day. Vitamin B1 in the bulgur has an important role in the nerve and immune systems.

Considering the benefits in terms of health and importance in the human nutrition of the bulgur, the improved convenience food containing bulgur and the production method thereof provide fast and easy-to-prepare advantages in terms of consumer. It provides consumer with completely natural and healthy product as no chemical preservative, colorant or aromatizer are used during the production stage of said convenience food containing bulgur.

While producing said convenience food containing bulgur, by firstly filtering foreign objects from bulgur, the filling process of the mixture containing bulgur, water, butter, olive oil, salt or seasoning is carried out in desired portions. the high temperature and pressure-resistant retort pouches are used in the packing stage. Afterwards, the packed products are placed into autoclave for two stage sterilization process. The packed product reaches up to 95-100 C° in the first sterilization stage and is kept under this temperature for 5-10 minutes. All bacteria and spores then are sterilized by keeping the product under high pressure at 120-122 C° for 10-20 minutes. After second stage, the cooling stage is immediately applied, and temperature of the product is reduced to 20-30C°. Autoclave devices have been used in medicine and laboratory technologies, pharmacy and health sector for a long time. In this case, sterilization is basic application field. There exist various application fields in food and fresh product industries, industrial researches and research institutes in the water and environmental sectors. Sterilization is a physical or chemical process applied for the purpose of cleaning all microorganism of any object or material from any kind of living organism. The term microorganism is a general term containing algae, protozoons, funguses, bacteria and viruses. Death means for microorganisms that they eternally lose their growing and splitting skills. Killing microorganism by means of physical or chemical methods is carried out as a first-degree reaction. This means that the methods for killing microorganisms will not immediately and in one go kill all of the microorganisms in a population. Color losses in the product are minimized, the original taste and structure of the product is maintained, and the packing material used is not damaged during the production process by means of applying 2 stages of air-steam sprayer autoclave to said convenience food containing bulgur. The packing material used is a high temperature and microwave-resistant retort pouch. The retort pouches are heat treatment-durable, flexible and laminated food packings. Their shelf life is as long as cans'. The retort pouches are considered to be the most important development in the food packings since metal cans. Microorganisms in the product structure are eliminated through high pressure and temperature by means of the convenience food containing bulgur that is easy to consume and the product can be securely stored throughout its shelf life as long as its packing is not opened. By means of said convenience food containing bulgur, consumer can obtain his/her healthy and natural bulgur dish and consume the product by only heating it in microwave oven or pan.

The protection scope of this application is specified under claims and cannot be restricted to the descriptions above, given only for illustrative purposes. It is clear that any innovation to be provided by a person skilled in the art by means of change in parts in form and use of similar embodiments can be applied in other areas for similar objects. Therefore, it is obvious that such embodiments will particularly lack of criteria for the innovation in our application and reaching beyond the state of art.

## Claims

1. The invention is a method for producing convenience food containing bulgur, **characterized in that** it comprises the process steps of;
- filling the product in retort pouch,
- packing products,
- applying the first sterilization process in autoclave to the packed product,
- applying the second sterilization process in autoclave to the product after the first sterilization stage,
- presenting to consumer by cooling it after sterilization is finished.

2. The method for producing convenience food containing bulgur according to Claim 1, **characterized in that** it comprises the process step of cleaning the foreign objects from the bulgur to be added to product before preparing the mixture.

3. The method for producing convenience food containing bulgur according to Claim 1, **characterized in that** it comprises the process step of obtaining the product from bulgur, water, butter, olive oil, salt or seasoning.

4. The method for producing convenience food containing bulgur according to Claim 1, **characterized in that** it comprises the process step of exposing the product packed in the first sterilization stage to 95-100 C°.

5. The method for producing convenience food containing bulgur according to Claim 1, **characterized in that** it comprises the process step of keeping the product packed in the first sterilization stage at 95-100 C° for 5-10 minutes.

6. The method for producing convenience food containing bulgur according to Claim 1, **characterized in that** it comprises the process step of applying second sterilization stage to the product under high pressure at 120-122 C° so as to kill all bacteria and spores therein after first sterilization stage.

7. The method for producing convenience food containing bulgur according to Claim 1, **characterized in that** it comprises the process step of keeping the product in second sterilization stage for 10-20 minutes so as to kill all bacteria and spores therein.

8. The method for producing convenience food containing bulgur according to Claim 1, **characterized in that** it comprises the process step of cooling the product to 20-30 C° by applying fast cooling after second sterilization stage.

9. The method for producing convenience food containing bulgur according to Claim 1, **characterized in that** it comprises the process step of respectively applying first and second sterilization through air-mixed sterilization technique for the purpose of prolonging the shelf life of product by killing all bacteria and spores in the product.

10. The invention is a method for producing convenience food containing bulgur and food product produced by means of said method, **characterized in that** it comprises bulgur and butter.

11. Convenience food containing bulgur according to Claim 10, **characterized in that** it comprises water, olive oil, salt and/or seasoning.

12. Convenience food containing bulgur according to Claim 10, **characterized in that** a heat treatment-resistant retort pouch is used in packing of the convenience food containing bulgur.
